Europäisches Patentamt

European Patent Office

Office européen des brevets

(11) Numéro de publication: **0 128 130**
**A2**

(12) **DEMANDE DE BREVET EUROPEEN**

(21) Numéro de dépôt: **84870067.0**

(22) Date de dépôt: **29.05.84**

(51) Int. Cl.³: **H 02 B 11/12**
**H 02 B 11/04**

(30) Priorité: **02.06.83 BE 210914**

(43) Date de publication de la demande:
**12.12.84 Bulletin 84/50**

(84) Etats contractants désignés:
**AT CH DE FR GB IT LI NL SE**

(71) Demandeur: **JEMA**
**Rue Docteur De Meersman 37**
**B-1070 Bruxelles(BE)**

(72) Inventeur: **Bougard, Roger**
**rue Fleurbeek 7**
**B-1620 Drogenbos(BE)**

(74) Mandataire: **Vanderperre, Robert et al,**
**Bureau VANDER HAEGHEN 63 Avenue de la Toison d'Or**
**B-1060 Bruxelles(BE)**

(54) **Cellule blindée avec disjoncteur sectionnable extractible.**

(57) Le disjoncteur (4) est monté sur des rails télescopiques fixés sur un châssis (21) monté pour pouvoir pivoter autour d'un axe horizontal. Un dispositif de blocage (20) actionnable de l'extérieur bloque le châssis dans une première position pour laquelle le disjoncteur se trouve non sectionné et dans une seconde position pour laquelle le disjoncteur se trouve sectionné, le dispositif de blocage comprenant un moyen (29) disposé pour bloquer l'organe de commande de sectionnement (15) lorsque le dispositif de blocage bloque le châssis. Un volet (9) obture automatiquement le passage entre le compartiment de disjoncteur (3) et le compartiment (2) contenant le jeu de barres de tension lorsque le disjoncteur est sectionné.

FIG. 3

EP 0 128 130 A2

# Cellule blindée avec disjoncteur sectionnable extractible

La présente invention concerne une cellule blindée avec disjoncteur sectionnable en première position et extractible en seconde position pour la réalisation de postes ou tableaux de distribution de tension.

Les cellules blindées avec disjoncteur extractible sont couramment utilisées dans les installations industrielles. Les cellules blindées connues consistent en une cabine métallique comprenant un compartiment qui renferme le jeu de barres de tension, un compartiment qui contient les têtes de câbles et les transformateurs de courant, et un châssis mobile portant le disjoncteur et ses mécanismes de manoeuvre. Le châssis mobile est extractible vers l'avant de la cellule et le compartiment contenant les têtes de câbles et les transformateurs de courant est situé à l'arrière de la cellule, le raccordement du câble d'arrivée s'effectuant par l'arrière de la cellule. Il en résulte que les cellules connues ne peuvent être placées avec leur face arrière contre un mur ou être placées dos à dos car il faut toujours ménager un espace de garde pour permettre l'accès aux points de raccordement des câbles.

L'invention a pour but de procurer une cellule blindée qui ne nécessite pas d'espace de garde devant leur face arrière, ce qui permet de placer les cellules dos à dos ou avec leur face arrière contre un mur de manière à

2

pouvoir réaliser des tableaux de distribution ayant un encombrement au sol plus réduit.

Ce but est atteint par la cellule blindée selon l'invention caractérisé par un disjoncteur monté sur des rails télescopiques fixés sur un châssis monté pour pouvoir pivoter autour de pivots horizontaux fixés aux cadres de la cabine, un dispositif d'entraînement pour faire pivoter le châssis autour de ses pivots et commandé à partir d'un organe de commande de sectionnement accessible de l'extérieur, un dispositif de blocage actionnable de l'extérieur afin de bloquer le châssis dans une première position pour laquelle le disjoncteur se trouve non sectionné et dans une seconde position pour laquelle le disjoncteur se trouve sectionné, le dispositif de blocage comprenant un moyen disposé pour bloquer l'organe de commande de sectionnement lorsque le dispositif de blocage bloque le châssis.

Suivant un aspect particulier de l'invention, la cellule se caractérise encore par une demi-cloison de séparation et un volet mobile entre le compartiment contenant le jeu de barres de tension et le compartiment contenant le disjoncteur, et par un dispositif de manoeuvre automatique du volet, ce dispositif étant couplé au châssis de telle sorte que le volet soit en position rétractée qui dégage un passage lorsque le châssis est dans sa première position (disjoncteur non sectionné) et que le volet soit en position d'obturation lorsque le châssis est dans sa seconde position (disjoncteur sectionné).

Une particularité de la cellule blindée selon l'invention est qu'elle assure un maximum de sécurité d'utilisation tant pour le matériel que pour le personnel.

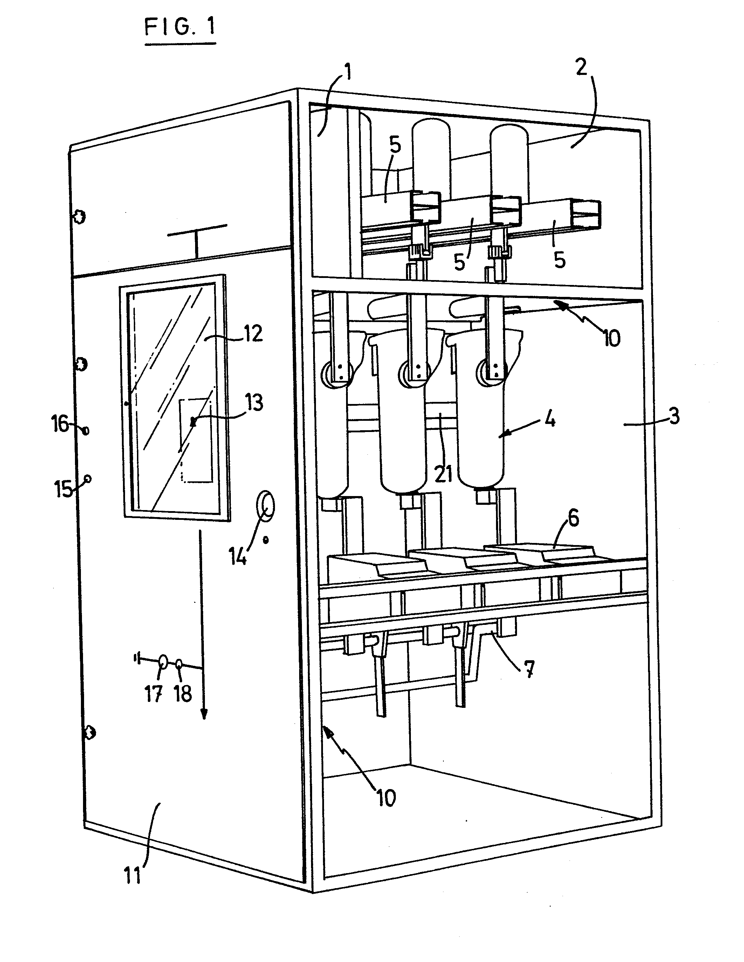

L'invention est exposée plus en détails dans ce qui suit avec référence aux dessins ci-annexés sur lesquels:
. la figure 1 est une vue schématique en perspective d'un exemple d'exécution d'une cellule blindée selon l'invention;

3

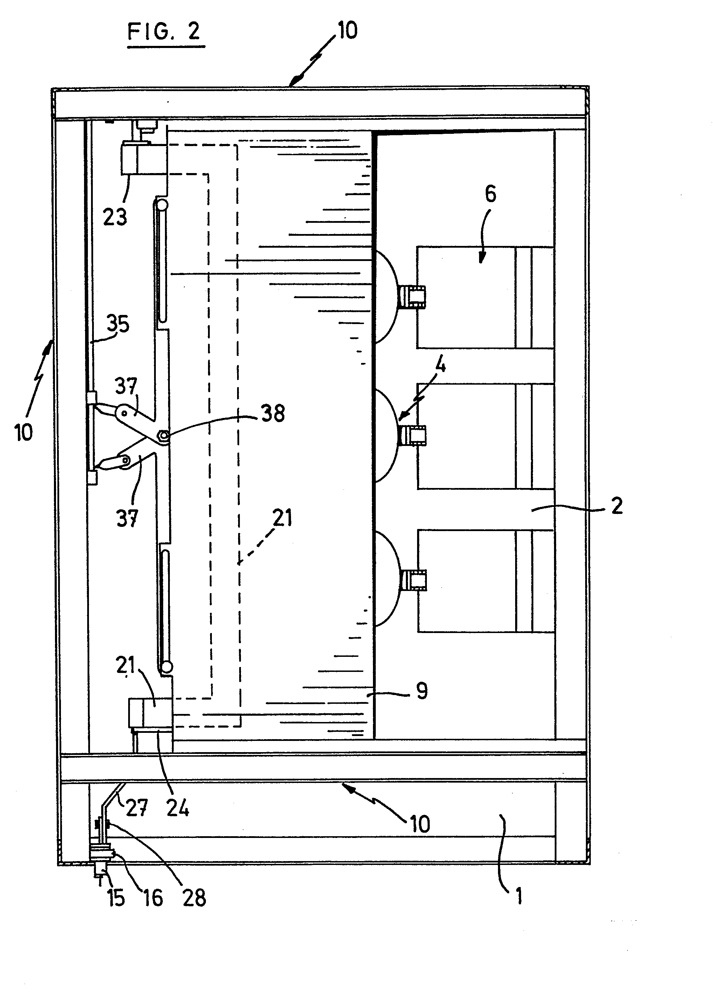

. la figure 2 est une vue en plan partielle du mécanisme intérieur de la cellule de la figure 1;

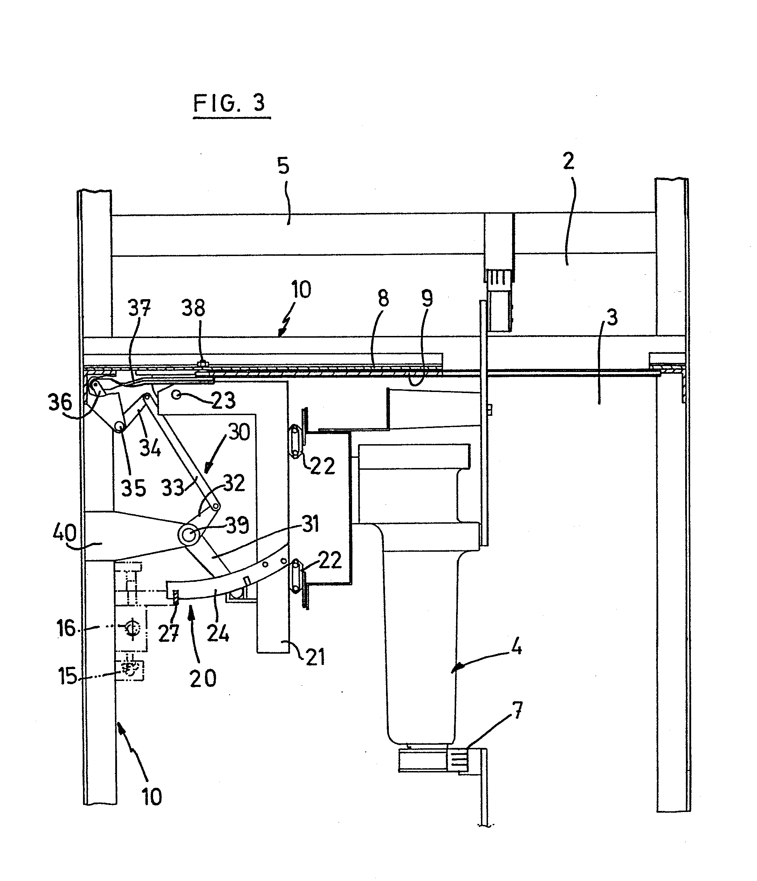

. la figure 3 est une vue en élévation du châssis porte-disjoncteur et de ses mécanismes de commande en position de service;

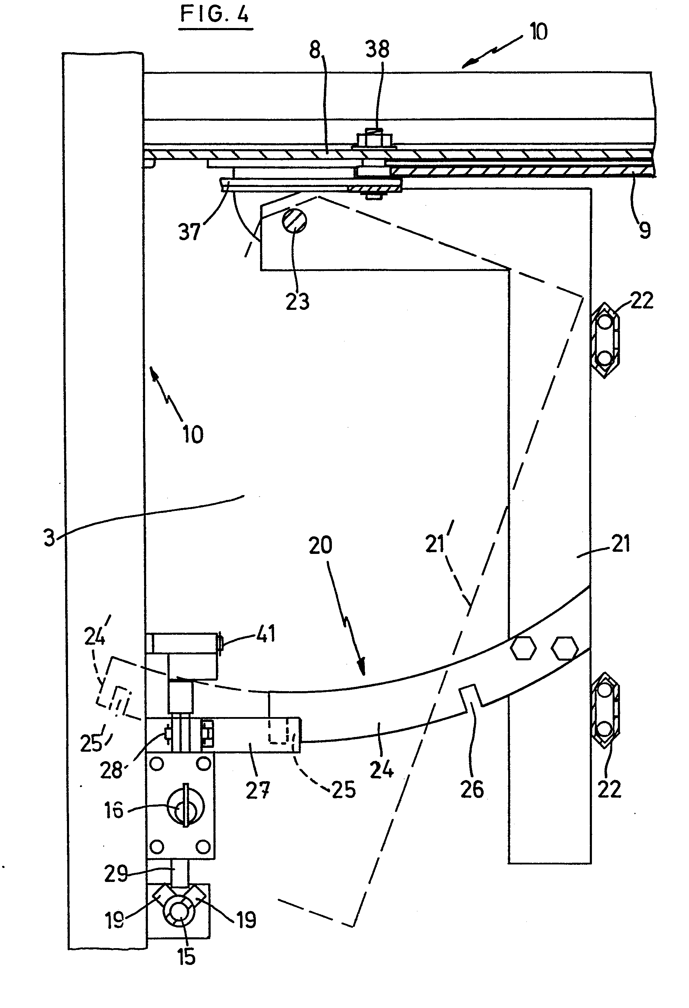

. la figure 4 est une vue à échelle agrandie d'une partie de la figure 3;

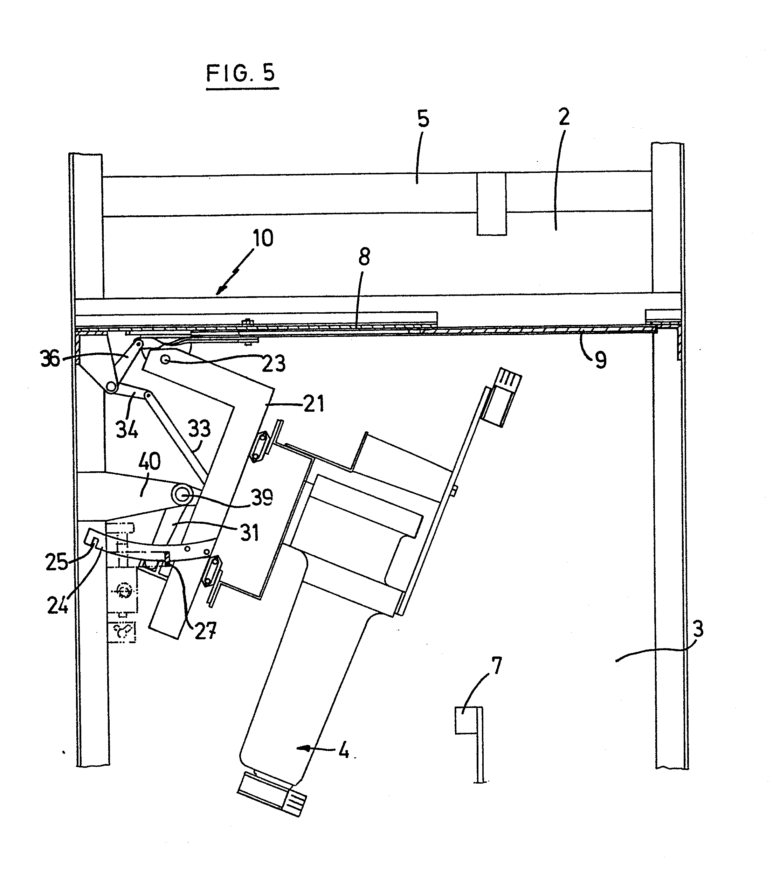

. la figure 5 est une vue en élévation montrant le châssis porte-disjoncteur en position inclinée dans laquelle le disjoncteur est sectionné.

La cellule blindée selon l'invention comprend trois compartiments: un coffret basse tension 1 à la partie supérieure avant, un caisson jeu de barres haute tension 2 à la partie supérieure arrière, un compartiment principal 3 renfermant notamment le disjoncteur 4 et les dispositifs de commande et de verrouillage décrits plus loin. La cellule est constituée par des cadres métalliques en cornière 10 et des panneaux en tôles d'acier, l'ensemble étant assemblé par soudage et boulonnage.

Le coffret basse tension 1 est complètement isolé des compartiments haute tension 2 et 3 et est accessible par une porte frontale fermée par loquets. Ce coffret contient les dispositifs de connexion assurant la liaison avec les organes mobiles du disjoncteur, un jeu de conducteurs basse tension (barres méplates ou nappe de conducteurs souples), des câbles auxiliaires et il contient également les accessoires propres au schéma de la cellule.

Le caisson jeu de barres 2 situé derrière le coffret basse tension 1 est traversé par le jeu de barres haute tension 5 et est totalement inaccessible en service normal. Ce caisson renferme également les connexions de liaison entre le jeu de barres et les trois pinces d'embrochage mobiles supérieures du disjoncteur. Le jeu de barres 5 est commun à l'ensemble des cellules blindées constituant un tableau de distribution.

La partie inférieure de la cellule est occupée par le compartiment principal 3 dans lequel est logé le disjoncteur sectionnable extractible ou débrochable, les transformateurs d'intensité 6, le sectionneur de terre 7 et le raccordement tête de câble ainsi que les dispositifs de commande et de verrouillage. Le compartiment 3 est séparé du caisson supérieur arrière 2 par une demi-cloison 8 et par un volet d'obturation 9 à commande automatique. La face frontale du compartiment principal 3 est équipée d'une porte 11 garnie d'une fenêtre 12 dont l'ouverture permet d'avoir accès à une serrure de verrouillage 13. La porte 11 est également garnie d'un hublot 14 permettant de voir et contrôler de l'extérieur le positionnement correct des pinces de contact mobiles du disjoncteur 4 (pinces de sectionnement au jeu de barres de tension 5 et sur les transformateurs de courant 6). Les dispositifs de verrouillage et de sécurité de la cellule sont tous commandés à partir d'une seule clé qui se trouve verrouillée dans la serrure de verrouillage 13 lorsque la cellule est en service avec le disjoncteur enclenché. La porte 11 présente encore des ouvertures permettant l'accès à un axe de commande de sectionnement 15 actionnable à l'aide d'une manivelle amovible, à un axe de commande de mise à la terre 17 et à une serrure de sûreté 18 dont les rôles sont décrits plus loin.

Le disjoncteur 4 est monté sur des rails télescopiques 22 fixés sur un châssis 21 (figure 2) lui-même monté en sorte de pouvoir pivoter sur roulements à billes autour de pivots 23 fixés aux cadres 10 de la cellule. Le pivotement du châssis 21 autour de ses pivots est contrôlé par un dispositif d'entraînement quelconque (non représenté pour ne pas surcharger les dessins) couplé à l'axe de commande de sectionnement 15 accessible de l'extérieur à travers une ouverture dans la porte 11. Au châssis 21 est associé un dispositif de blocage 20. Sur le châssis 21 est fixé un étrier en arc de cercle 24 présentant des encoches 25 et 26 sur son bord extérieur. Ces encoches sont destinées à loger l'extrémité d'une armature de blocage 27 montée pour pouvoir basculer autour d'un axe 28 fixé aux cadres 10. L'extrémité opposée de l'armature 27 est couplée à une extrémité du pêne 29 de la serrure 16. Lorsque le châssis 21 se trouve dans la position représentée aux figures 2 à 4 les pinces de sectionnement du disjoncteur 4 sont embrochées. L'extrémité libre du pêne 29 bloque alors les butées d'arrêt 19 fixées sur l'axe de commande de sectionnement 15 et empêche ainsi tout mouvement de cet axe. Il est alors impossible de sectionner le disjoncteur 4 et de fermer les couteaux de mise à la terre, comme aussi d'ouvrir la porte frontale 11. D'autre part, le volet 9 est en position rétractée, dégageant entre le compartiment de disjoncteur 3 et le caisson jeu de barres 2 un passage pour les pinces de sectionnement supérieures du disjoncteur. L'embrochement correct des pinces de sectionnement sur le jeu de barres et sur les transformateurs de courant 6 peut alors être observé de l'extérieur à travers le hublot 14.

Pour sectionner le disjoncteur, ouvrir la porte 11 de la cellule et débrocher le disjoncteur, c'est-à-dire l'extraire de son compartiment 3, il faut d'abord obligatoirement déverrouiller la cellule. Pou ce faire, on fait déclencher le disjoncteur à l'aide de la clé qui était verrouillée dans la serrure 13, ce qui a pour effet de libérer cette clé qui sert alors à la mise en sécurité complète de la cellule comme on va le voir. La clé est introduite dans la serrure 16 où la manoeuvre de cette clé a pour effet de déplacer le pêne 29. L'extrémité libre de celui-ci se dégage alors d'entre les butées d'arrêt 19 de l'axe de commande 15 qui peut donc être manoeuvré tandis que l'extrémité supérieure du pêne fait basculer l'armature de blocage 27 par pivotement autour de son pivot 28. L'extrémité libre de l'armature 27 se dégage alors de l'encoche 25, ce qui libère le châssis 21. La manoeuvre de l'axe de commande de sectionnement 15 à l'aide d'une manivelle entraîne lentement le châssis 21 dans un mouvement de pivotement régulier. En fin de manoeuvre le châssis 21 prend la position montrée à la figure 5, l'extrémité libre de l'étrier 24 venant buter contre une butée fin de course 41. Dans cette position du châssis, l'encoche 26 de l'étrier se trouve juste en face de l'extrémité de l'armature 27 et celle-ci peut alors être actionnée à l'aide d'une nouvelle manoeuvre de la clé dans la serrure 16 afin d'engager l'extrémité libre de l'armature 27 dans l'encoche 26 et bloquer ainsi le châssis 21 dans sa position inclinée pour laquelle le disjoncteur 4 est sectionné.

Pendant la manoeuvre du châssis 18 le volet 9 se trouve déplacé automatiquement pour venir fermer le compartiment 3 de manière à l'isoler mécaniquement du caisson jeu de barres 2. La commande du volet 9 se fait par un mécanisme 30. Le volet 9 est couplé au châssis 18 par un mécanisme articulé 31-38 monté pour pivoter autour d'un pivot horizontal 39 monté sur un support 40 fixé aux cadres 10 de la cellule.

Après le blocage du châssis 21 dans sa position inclinée (figure 5), il reste à actionner les couteaux de mise à la terre 7. A cet effet, on retire la clé de la serrure 16 et on l'introduit dans la serrure 18 accessible à travers une ouverture dans la porte frontale 11, ce qui libère l'axe de commande de mise à la terre 17 qui peut alors être manoeuvré à l'aide d'une manivelle amovible de manière à actionner les couteaux de mise à la terre.

Lorsque la cellule se trouve ainsi mise en sécurité complète par mise à la terre, le mécanisme de fermeture de la porte se trouve libéré, ce qui permet alors et seulement alors d'ouvrir la porte 11 et de débrocher le disjoncteur 4, c'est-à-dire de l'extraire de son compartiment par glissement vers l'avant sur ses rails 22.

0128130

Pour la mise sous tension de la cellule on procède de manière inverse en commençant par l'embrochement du disjoncteur et l'ouverture des couteaux de mise à la terre pour terminer par la fermeture des pinces de sectionnement puis l'enclenchement du disjoncteur à l'aide de la clé verrouillée dans la serrure de verrouillage 13. Pendant la manoeuvre du châssis porte-disjoncteur pour prendre sa position verticale montrée à la figure 3 le volet 9 reprend automatiquement sa position rétractée et dégage le passage entre le compartiment inférieur 3 et le caisson jeu de barres 2.

REVENDICATIONS

1. Cellule blindée pour tableau de distribution de tension constituée d'une cabine métallique contenant un disjoncteur extractible ayant des pinces de contact de sectionnement pour coopérer avec un jeu de barres de tension, caractérisée en ce que le disjoncteur (4) est monté sur des rails télescopiques (22) fixés sur un châssis (21) monté pour pouvoir pivoter autour de pivots horizontaux (23) fixés aux cadres de la cabine, un dispositif d'entraînement pour faire pivoter le châssis (21) autour de ses pivots (23) et commandé à partir d'un organe de commande de sectionnement (15) accessible de l'extérieur, un dispositif de blocage (20) actionnable de l'extérieur afin de bloquer le châssis (21) dans une première position pour laquelle le disjoncteur (4 ) se trouve non sectionné et dans une seconde position pour laquelle le disjoncteur se trouve sectionné , le dispositif de blocage (20) comprenant un moyen (29) disposé pour bloquer l'organe de commande sectionnement (15) lorsque le dispositif de blocage (20) bloque le châssis (21).

2. Cellule blindée selon la revendication 1, caractérisée en ce que le dispositif de blocage (20) comprend un organe de blocage (27) positionné pour pouvoir se loger dans des encoches (25, 26) prévues dans un étrier (24) fixé au châssis (21) de manière à bloquer le châssis dans une première position pour laquelle le disjoncteur est non sectionné et dans une seconde position pour laquelle le disjoncteur est sectionné, ledit organe de blocage (27) étant actionné par un moyen de commande (29) manoeuvrable de l'extérieur.

3. Cellule blindée selon la revendication 1 ou 2, caractérisée en ce que le moyen de commande (29) dudit organe de blocage (27) est constitué par le pêne d'une serrure (16) propre à recevoir une clé servant à déclencher le disjoncteur.

0128130

4. Cellule blindée selon la revendication 2, caractérisée en ce que le dispositif de blocage (20) comprend en outre une butée fin de course (41) disposée pour positionner le châssis (21) dans sa seconde position.

5. Cellule blindée selon la revendication 2, caractérisée en ce que le moyen de commande (29) dudit organe de blocage (27) a une extrémité disposée pour se loger entre deux butées d'arrêt (19) fixées sur l'organe de commande de sectionnement (15) lorsque ledit moyen de commande (29) n'actionne pas l'organe de blocage (27), de manière à empêcher toute manoeuvre de l'organe de commande de sectionnement (15).

6. Cellule blindée selon l'une quelconque des revendications précédentes, caractérisée par une demi-cloison de séparation (8) et un volet mobile (9) entre le compartiment (2) contenant le jeu de barres de tension et le compartiment (3) contenant le disjoncteur, et par un dispositif de manoeuvre automatique du volet (9), ce dispositif (30) étant couplé au châssis (21) de telle sorte que le volet (9) soit en position rétractée qui dégage un passage lorsque le châssis est dans sa première position (disjoncteur non sectionné) et que le volet soit en position d'obturation lorsque le châssis est dans sa seconde position (disjoncteur sectionné).

FIG. 1

FIG. 2

FIG. 3

FIG. 4

FIG. 5